# EUROPEAN PATENT SPECIFICATION

(11) **EP 1 647 067 B1**
(45) Date of publication and mention of the grant of the patent: **23.04.2014**
(21) Application number: 03817403.3
(22) Date of filing: 10.07.2003
(51) Int. Cl.: H01M 8/02, H01M 8/24

(54) **METHOD AND DEVICE FOR THE STACKING OF FUEL CELLS**
VERFAHREN UND EINRICHTUNG ZUM STAPELN VON BRENNSTOFFZELLEN
PROCEDE ET DISPOSITIF D'EMPILEMENT DE PILES A COMBUSTIBLE

(43) Date of publication of application: 19.04.2006
(73) Proprietor: MICHELIN Recherche et Technique S.A., 1763 Granges-Paccot (CH); PAUL SCHERRER INSTITUT, 5232 Villigen PSI (CH)
(72) Inventor: BUCHI, Felix, CH-4900 Langenthal (CH); FREUNBERGER, Stefan, CH-5303 Wurenlingen (CH)
(74) Representative: Bauvir, Jacques
(86) International application number: PCT/EP2003/007480
(87) International publication number: WO 2005/006472

(56) References cited:
- US-A- 4 759 989
- US-A- 5 300 370
- US-A- 6 060 189
- PATENT ABSTRACTS OF JAPAN vol. 017, no. 183 (E-1348), 9 April 1993 (1993-04-09) & JP 04 334868 A (TANAKA KIKINZOKU KOGYO KK;OTHERS: 01), 20 November 1992 (1992-11-20)

## Description

The present invention relates to fuel cell stacks. A fuel cell has a structure with sets of electrochemical elements including anode, membrane and cathode, arranged between end plates. More particularly, the invention relates to certain sub-components that are assembled together to build up a fuel cell stack and relates to the process to assemble or to repair a fuel cell.

In a fuel cell, there is an anode situated between the electrolyte and one end plate, and a cathode situated between the electrolyte and the other end plate. Solid electrolytes are known; accordingly, the electrolyte may itself possess the necessary rigidity to be fitted in the cell. In the same way the operating temperatures vary considerably, differing from the ambient temperature by up to several hundred degrees Celsius or more. Joining individual fuel cells together to form a fuel cell stack, in order to obtain the desired operating voltage through the series connection of a suitable number of cells is also well known and is made routinely.

In addition to the individual fuel cells, then, a fuel cell stack contains special end plates on either side of the stack, which terminate the stack, and in front of each of the said end plates a connection plate (for example, a gold-coated copper plate) with the connections, in order that the stack can be connected to the current conductors leading to the power consumer. The said elements are stacked until the fuel cell stack comprises the desired number of fuel cells, and are then clamped including the connection plates and end plates. This can be done by means of tie rods, which run right through the stack and are bolted to the end plates.

Assembling such a stack is costly, since all the elements must be laid one on top of another, piece by piece, and held in the correct seating position until finally bolted. The connection plates, for example, are moreover expensive to manufacture.

It is possible to simplify assembly by the use of so-called bipolar plates. A bipolar plate is an assembly including the plates of two adjacent fuel cells arranged in one part, with the advantage that in assembling multiple fuel cells to form a fuel cell stack the number of parts to be assembled can be reduced. Additional cooling ducts can be arranged in the bipolar plates, which leads to a substantial improvement in the heat balance of the fuel cell stack. During operation of the fuel cell stack, current flows in a bipolar plate, since this constitutes the electrical connection between the anode of one adjacent fuel cell and the cathode of the other adjacent fuel cell.

It is equally possible to bond adjacent end plates of the individual fuel cells to form a bipolar plate. Instead of clamping, individual elements or all elements of the fuel cell or the entire fuel cell stack could be adhesively bonded together, which provides a functional solution. This process is likewise expensive.

Prior inspecting the parts is required to avoid bonding damaged parts such as parts featuring scratches etc; then assembling implies uniform application of the adhesive, drying on, dissipation of the solvent vapours, bonding under pressure and heat, cleaning off excess adhesive (blockage of gas supply and cooling ducts etc), checking that all media such as air, hydrogen, water etc are properly separated from one another etc. All the above mentioned operations are obstacles to easy, rapid assembly of the elements to form a fuel cell or a fuel cell stack. This is especially non productive since a fuel cell stack may contain many fuel cells. For example, a stack of fuel cells having a polymer membrane as electrolyte with an output of 7kW and weighing approximately 20 kg has around 100 cells.

There is also the question of testing a newly manufactured fuel cell stack, and of repair and maintenance; individual defective cells must be withdrawn from the stack, repaired or exchanged before they can be reinserted. Although this is basically not impossible in the case of a bonded stack, the effort involved is prohibitive. Even with a clamped stack the effort is still considerable: the clamping must be released, which demands particular care when handling the cells which are not to be replaced. These should not be separated from one another and in particular should not be dismantled as a unit, so as not to disturb the original seating of the individual elements.

A further disadvantage lies in the use of bipolar plates: replacement of the selected cells must include the end plates of the adjacent cells. The adjacent cells must therefore be separated; electrodes and electrolyte lose their original seating. The advantage accruing in the manufacture of the fuel cell stack becomes a disadvantage in the further life of the stack.

It has become known practice, therefore, to form sets of two end plates and to seal them along their common edge using a corded seal in the nature of an O-ring, thereby creating a unit identical in function to a bipolar plate. In so doing, the precise machining of the adjoining surfaces of the two end plates is critical, since the contact resistance must remain small (otherwise the fuel cell stack loses efficiency) and cooling ducts should remain tightly sealed. The run and sealing property of the cord seal is just as critical, since depending on the construction of the fuel cell stack the gas supply ducts have to be sealed off from one another (one duct carries oxygen, for example, and the other duct hydrogen). Fitting the expensive cord seal (which has to be individually manufactured for specific end plates) is difficult and therefore costly.

The disadvantages cited above also apply to the manufacture and assembly of the connection and end plates of the stack with the associated seals. Although they are not formed in one piece, for the sake of descriptive simplicity, sets of two joined end plates resembling the bipolar plates will likewise be referred to as bipolar plates, since these sets have the same function in the fuel cell stack as the bipolar plates formed in one piece.

Consequently, it is possible on the one hand to use one-piece bipolar plates, with the disadvantage that when detaching a fuel cell from the fuel cell stack it is impossible to avoid separating adjacent cells. The alternative is to use separable, multipart bipolar plates as described above, which, however, entail considerable cost in manufacturing and joining together.

Document US 6 060 189 discloses an electrically conductive seal comprising first and second thin sheets of flexible graphite for bonding together individual electrical fuel cells into an assembly in the form of a stack in which the individual electrical fuel cells are electrically connected together by the electrically conductive seal.

However, no design construction has hitherto been disclosed, which affords the sound functionality afforded by the one-piece bipolar plate, for example, and which facilitates assembly and handling whilst also reducing the cost of manufacture, assembly and maintenance of the ends of the fuel cell stack with their end and end plates that also have to be kept fluid-tight.

Accordingly it is an object of the present invention to overcome these disadvantages and to provide an improved design construction.

The invention proposes a plate assembly for a fuel cell having a structure with an electrolyte zone, said plate assembly containing at least one duct for supplying a fluid to the electrolyte zone, said plate assembly contacting said electrolyte zone, the plate assembly comprising at least two plates, at least one of which including said at least one duct, a flexible intermediate layer being removably arranged between said two plates.

The invention also proposes a bipolar plate assembly for a stack of a plurality of fuel cells, said fuel cell stack comprising at least two cells connected in series, each having a structure with an electrolyte zone, said bipolar plate assembly joining the electrolyte zones of two adjacent cells, said bipolar plate assembly comprising a plate assembly as proposed hereabove.

It is also described an end plate assembly for a single fuel cell or for an end cell of a stack containing a plurality of fuel cells, said cell(s) having a structure with an electrolyte zone, said end plate assembly joining the electrolyte zone of a cell and to a current collector, said end plate assembly comprising a plate assembly as proposed hereabove.

The invention relates to a fuel cell stack having a plate assembly or a bipolar plate assembly or an end plate assemply as proposed hereabove, and to a flexible intermediate layer for a plate assembly or for a bipolar plate assembly or for an end plate assembly as proposed hereabove.

Additionally, it is described a method of changing at least one fuel cell or fuel cells in a fuel cell stack having intermediate layers wherein, having released the clamping of the stack, the end plates of adjacent fuel cells forming bipolar plates are separated from one another, and the cells to be changed with their associated end plates are removed together with the intermediate layers thereby released, and new intermediate layers are used in assembling intact cells.

The use of a conductive intermediate layer firstly dispenses with the direct, electrically conductive contact between the end plates, which also allows the intermediate layer to be designed as a flat element extending over the dimensions of the end plates, thereby providing an easily handled element for the assembly of a fuel cell stack or the replacement of fuel cells in a fuel cell stack.

In addition to achieving the above mentioned advantages, a compressible intermediate layer furthermore allows it to bear flexibly against the adjoining surfaces of the adjacent end plates, with the result that less stringent demands can be placed on the production tolerances for the end plates. This applies not only to the local surface quality but also to the design form of the surface over its entire dimension, whether this be of convex or inclined design, for example, instead of a flat design. A deformable intermediate layer is capable of offsetting such machining defects, so that the machining itself can be simpler and hence much less expensive.

In order to assemble a fuel cell stack, the individual elements are first placed together and the clamping then applied. With the use of the intermediate layer, all end plates or bipolar plates can be aligned in the stack during clamping with deformation of the intermediate layers. There is no overstressing of the electrolyte, for example, or of the carrier structure (Polymer Exchange Membrane or PEM) in the finally assembled stack.

Since the end plates may have a thickness in the order of a millimetre and longitudinal and lateral dimensions in the order of 10 cm or more, for example, the cooling ducts must be designed as an open labyrinth on the intermediate layer side, so that the labyrinth is covered by the intermediate layer and the cooling ducts are sealed. In contrast to the known one piece bipolar plates, a fully bonded bipolar plate allows cooling ducts to be provided in the plates easily.

The intermediate layer is advantageously impervious to the ambient air and to the media used, such as hydrogen or oxygen and a cooling medium. This makes it possible to achieve a compact stack construction.

Flexible graphite possesses the stated characteristics. The invention is not limited to this material, however, but encompasses all materials that are conductive and can be used as intermediate layer.

Equipping the intermediate layer with an electrically conductive structure obviates the need to use a hitherto indispensable plate for the connection of the electrical conductors to the fuel cell stack. Since the copper plates hitherto used had to be provided with corrosion protection (e.g. gold coating), the present invention not only simplifies assembly but also brings a significant reduction in manufacturing costs.

The invention will be explained in more detail with reference to the drawings, in which:
- Fig 1: shows a schematic diagram of the structure of a stack of fuel cells according to the prior art,
- Fig 2: shows a schematic diagram of the structure of a stack of fuel cells according to a first ,
- Fig 3: shows a schematic diagram of the structure of a bipolar plate using an intermediate layer,
- Fig 4: shows in more details a view of the first embodiment of an intermediate layer,
- Fig 5: shows a schematic diagram of the structure of a second embodiment of an intermediate layer,
- Fig 6: shows a schematic diagram of the structure of a stack of fuel cells using the first embodiment of an intermediate layer,
- Fig 7: shows a schematic diagram of the structure of another stack of fuel cells, using the second embodiment of an intermediate layer,
- Fig 8: shows a section into an intermediate layer according to one of the above first embodiment, The above first and second embodiments are not part of the invention but represent background prior art useful for the understanding of the invention;
- Fig 9: shows a section into a third embodiment of an intermediate layer according to the present invention,
- Fig 10: shows a detail of the third embodiment of an intermediate layer according to the invention,
- Fig 11: shows a general layout of an intermediate layer according to the third embodiment.

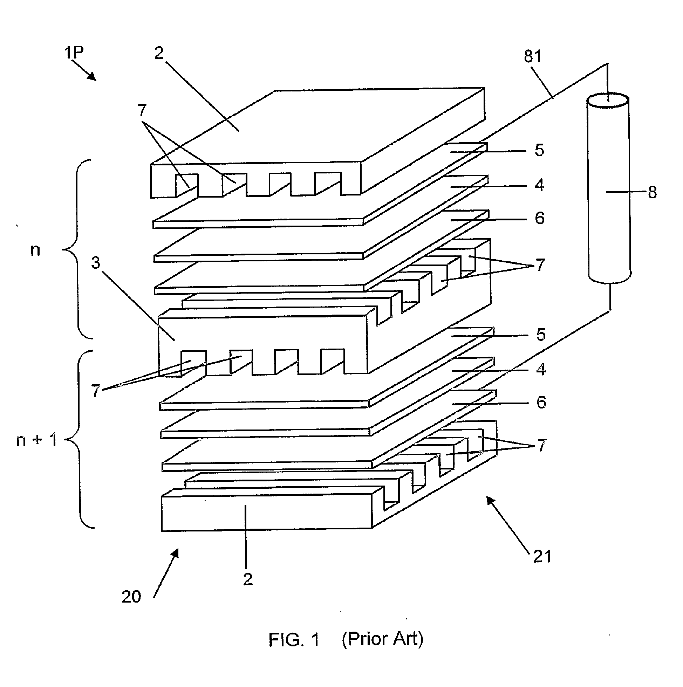

Fig. 1 is a schematic representation showing an example of a stack 1P of fuel cells formed from the two PEM fuel cells n and n+1, as known in the prior art. Such an arrangement will be familiar to the person skilled in the art. For the sake of simplicity, the stack 1P is shown with only two fuel cells n and n+1; but it may contain any number of cells. In a common application, for example, one hundred cells are arranged in the stack. Each fuel cell n and n+1 comprises end plates 2 and a part of a so-called bipolar plate 3, the cells n and n+1 being joined as already known to form the bipolar plate 3. Between the plates 2 and 3 is a polymer membrane 4, and between the membrane 4 and each of the plates 2, 3 an anode 5 or a cathode 6 respectively. Ducts 7 serve to deliver gas, H₂ to the anode side and O₂ or ambient air to the cathode side (other possible reactants will also be known to the person skilled in the art). The ducts are designed in such a way that the gases can be delivered as uniformly as possible to the entire membrane surface. In order not to clutter the diagram, gas supply and removal channels which run along the side faces 20, 21 of the stack 1P and which serve the ducts 7, are not shown. Cooling ducts in the bipolar plate 3 are likewise omitted.

The layout of the channels and the cooling ducts will be familiar to the person skilled in the art. The channels basically run the entire length of the stack 1P and terminate blindly at one end of the stack 1P, whilst at the other end of the stack 1P they generally pass through its end plate, so that they can be connected to an external supply. The same applies to the coolant supply for the stack 1P. An electrical load 8 is connected by a conductor 81 to one anode 5 and to one cathode 6. The figure 1 in schematic form shows the direct connection of the conductor 81 to the electrodes.

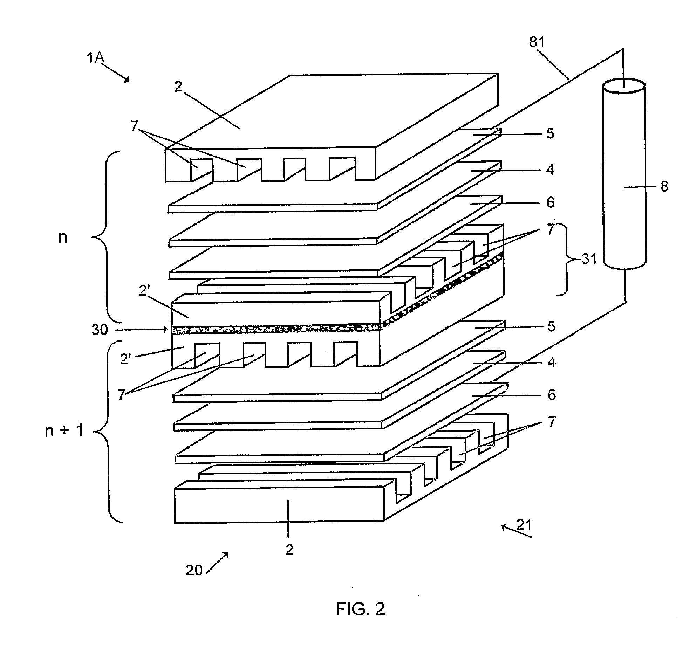

Fig. 2 shows a fuel cell stack 1A having a separable bipolar plate 31. The structure of the stack 1A corresponds to the stack 1P of Fig. 1, except for the separable bipolar plate 31 formed from plates 2' and the intermediate layer 30. The plates 2' are very similar (they could be identical) to the end plates 2.

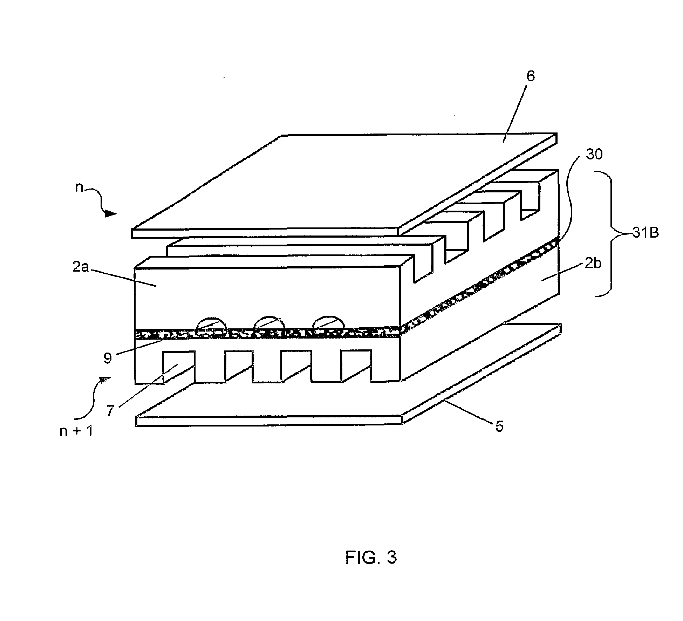

The general structure of the stack 1A according to Fig. 2 is, as stated, be familiar to the person skilled in the art. The geometry of the intermediate layer 30 is not limited to the shape represented in Fig. 3; such is also the case for any other element of the stack. The intermediate layer 30 is preferably composed of flexible graphite, like that marketed in Germany by SGL Carbon AG under the name "Sigraflex". The intermediate layer may be made in the form of a film with a thickness ranging from 1 mm to 0.1 mm. The thickness is preferably less than 1 mm, in the region of between 0.5 mm and 0.2 mm.

The above mentioned material conforms flexibly to the surface contour of the plates 2' and allows current to be transmitted over the entire contact surface with minimal transmission resistance. At the same time, the flexible conformity allows the machining tolerance in the production of the plates 2' to be relaxed, which reduces the scrap rate for defectively produced plates, thereby saving costs. If, for example, the contact surface of a plate 2' to the intermediate layer 30 is not aligned exactly parallel with the opposing surface in contact with the anode or cathode (the plate 2' then has a wedge shape), this results in an inclined position of the other plate 2'. This inclination can lead to stresses in the stack 1P, e.g. to an inadmissible, local loading of the membrane 4, which reduces the efficiency of the fuel cell affected and hence of the entire stack 1P. The deformable intermediate layer 30 eliminates this risk, since the relative mutual position of the plates 2' can be compensated for by the deformation of the layer 30.

Fig. 3 shows another application in which the use of an intermediate layer 30 according to the first embodiment allows to dispense with the use of a cord seal. It is reminded that the first and second embodiments do not form part of the invention but shows background art useful for the understanding of the invention. One can see a bipolar plate 31B in an exploded view similar to Fig. 2, with the adjacent anode 5 and cathode 6. The plate 2a belongs to the fuel cell n and the plate 2b to the fuel cell n+1. A flexible intermediate layer 30 is situated between the plates 2a and 2b. Cooling ducts 9 are arranged in the end plate 2a and are sealed off by the intermediate layer 30, thus equipped with the appropriate number of holes like holes 10 shown in Fig. 3, to provide channels supplying and recycling cooling fluid in and from ducts 9.

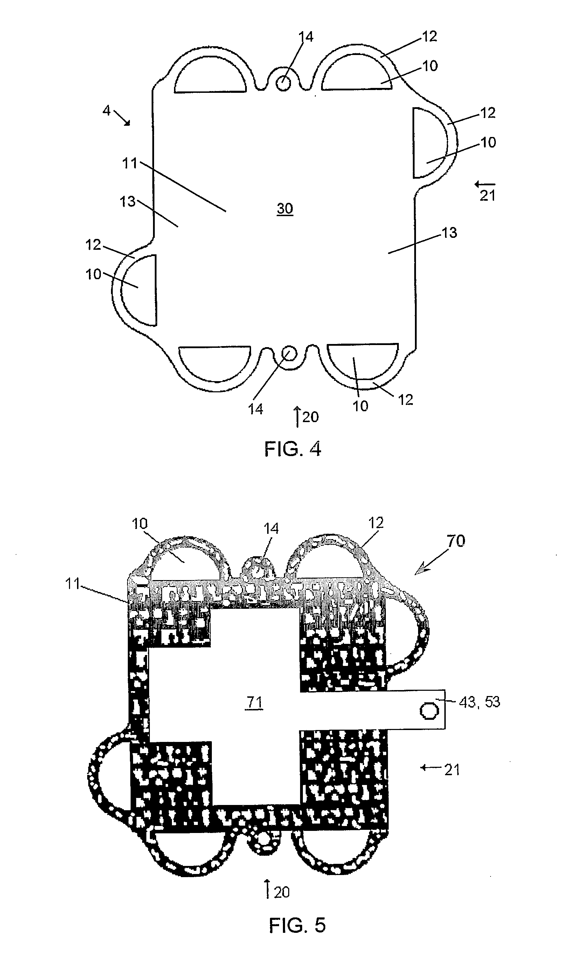

Fig. 4 shows in more details the intermediate layer 30, having a body 11 surrounded with edge sections 12 having holes 10. Each hole 10 is a small section of one of the channels supplying one of the required fluids to the stack 1A. As well known by those having a working skill in the art, similar holes and edge sections also are provided to the surrounding part of each plate 2', at least to the polymer membrane 4, and possibly to the anode 5 and cathode 6 (see Fig. 2), all those elements 2 and 4 having a layout similar to what is shown in Fig. 3 for the intermediate layer 30, for the elements 5 and 6 other layouts are possible too. The edge sections 12 of the intermediate layer 30 provide a fluid-tight seal for, so that the aligned holes 10 constitute gas supply and removal channels which run along the outsides 20, 21 of the stack 1 and feed the ducts 7 (Fig. 3) running transversely through the stack 1A.

The intermediate layer 30 furthermore has edge sections 13 forming a fluid-tight seal for the edges of the end plates 2'. This prevents any undesirable contact of the various media. Also shown are recesses 14 for tie elements, which mechanically hold the stack 1A together. The geometry of the intermediate layer 30 thereby corresponds to the geometry of the adjacent elements in the stack 1A, whether these are end plates 2 or plates 2' that are part of the bipolar plate 31 or any anode or cathode for current connection.

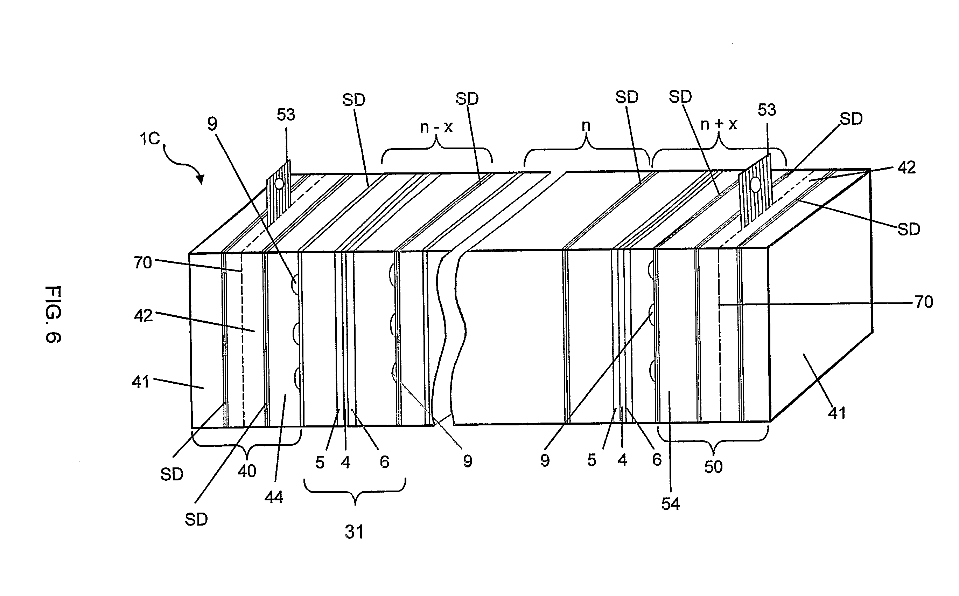

Fig. 6 shows a stack 1C with individual fuel cells n-x, n and n+x. The ends 40, 50 of the stack 1C have end plates 41 (the edges of plates 41 seals lateral channels, openings being optionally provided for connecting the channels to the external supply and recycling of fluids). Also shown are connection plates 42 with connecting poles 53 for the connection to an outside conductor (not shown). A cooling plate 44 in the form of a structured graphite plate is also shown in the end 40 and adjacent to the end 50. An unstructured plate 54 is inserted in the end 50. The plates 44, 54 prevent any cross-flow of the media, the plate 44, as stated, being additionally provided with cooling ducts 9.

The fuel cells n-x, n and n+x have the structure described for Fig. 1, but the cooling ducts 9 running transversely through the bipolar plates 3. A cord seal SD, which prevents undesirable contact of the various media circulating in the stack, is provided between all the above-mentioned elements (end plates 41, connection plates 42, cooling plate 44 and plate 54 and in the bipolar plates 3). The connection plates 42 comprise a second embodiment of an intermediate layer 70.

Fig. 5 shows the form of the intermediate layer 70 according to this second embodiment. A copper part 71 (good conductor for electricity) for the connecting of poles 53 and which draws off the current generated by the stack 1C to a outside conductor (not shown but similar to conductors 81), has been inserted. The copper part 71 has an outline contour such that a positively interlocking seat is obtained in the intermediate layer 70, and has the largest possible surface area for low contact resistance between the copper part 71 and the intermediate layer 70. The intermediate layer 70 shown in the figure is preferably of a three-sub-layer structure: two outer layers of flexible graphite have the configuration corresponding to the outline contour of the hatched area in the figure, so that the copper part 71 can be inserted into the free space and is covered by the outer layers.

In a variation of this embodiment, a conductor lattice can be sunk into the intermediate layer 70 and connected to the poles 53. The conductor lattice can also be inserted between sub-layers; the capacity for deformation displayed by the flexible graphite or some other substance with the same characteristics produces a more secure seating of the lattice and uninterrupted current flow. The contact resistance diminishes the more close-meshed the lattice.

It would be equally possible to use a conductor in the shape of a stranded cable, and to insert the strands between the sub-layers or to sink them into an intermediate layer 70. The manner in which current is led off from the stack 1C by means of an intermediate layer 70 may be modified, as required, by the person skilled in the art.

Thanks to this second embodiment, a special connection plate with gold coating can be dispensed with.

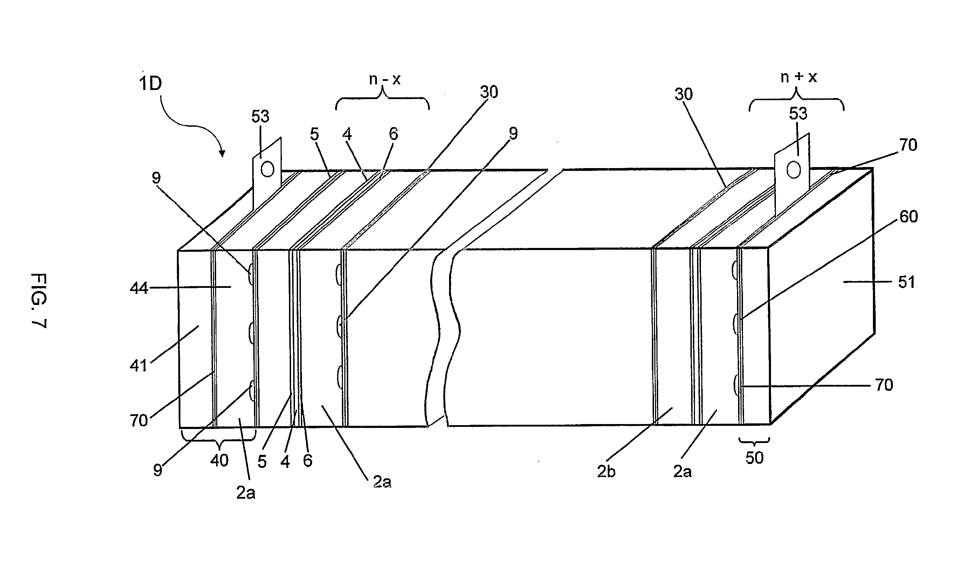

The above example shows that the use of an intermediate layer can be mixed with conventional configuration of several cells in a fuel cell stack. Obviously, as shown in Fig. 7 representing a stack 1D, the intermediate layer can be used in all and every cells of the stack. The fuel cell stack 1D shown in Fig. 7 comprises intermediate layers 70 and 30. The material of the intermediate layers 70 and 30 conforms flexibly to the surface contour of the plates 2a, 2b.

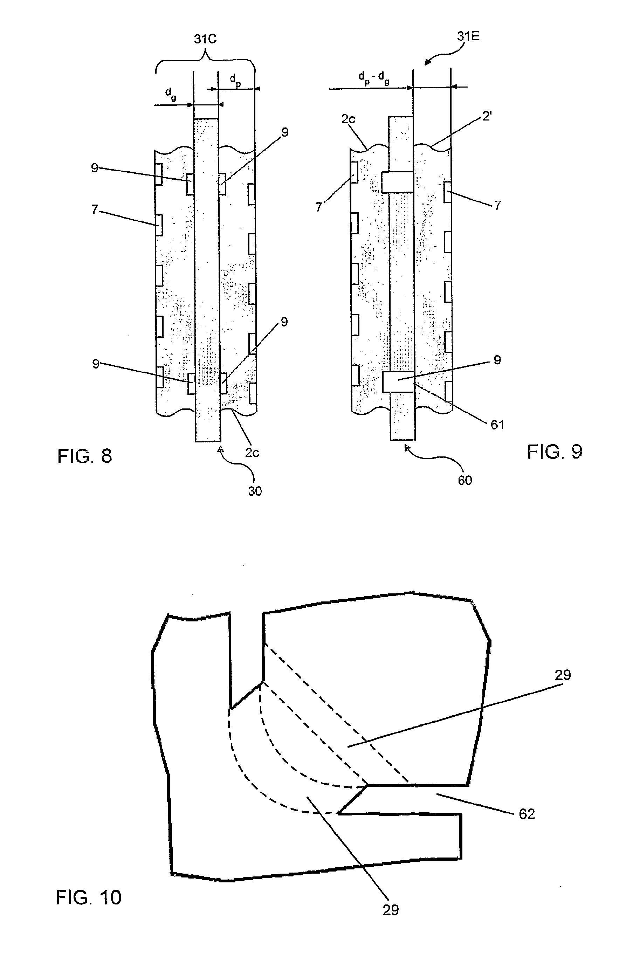

A third embodiment is explained below with Figs. 8 to 11. Where the application of the fuel cell stack requires a great compactness of the stack, it is proposed a third embodiment of an intermediate layer 60 with integrated cooling ducts. It achieves a radical saving of construction volume and weight due to an integration of functions. This is especially useful for technical applications, where the arrangement of series of cells usually uses bipolar plates 3. The third embodiment proposes an intermediate layer 60 of another design. Indeed, if the use of an intermediate layer 30 providing a separable bipolar plate has several advantages regarding to costs, electric conduction and manufacturing compared to gluing or making otherwise integral bipolar plates, however the additional graphite layer increases the construction volume of the bipolar plate. The third embodiment which is part of this invention proposes a design of the gasket that uses the thickness of the intermediate layer to embed at least in part the cooling ducts. Accordingly, the total thickness of the bipolar plate can be lowered.

Fig. 8 shows a bipolar plate 31C where plates 2C have on one face ducts 7 supplying hydrogen or oxygen or other suitable reactants, and have on the opposite face cooling ducts 9 for circulating a cooling fluid. The total thickness of plates 2c is dₚ, and total thickness of the intermediate layer 30 is d_{g}.

Figure 9 shows a bipolar plate 31E comprising one plate 2C, as above, and one plate 2'. It could be two plates 2C or two plates 2'. The bipolar plate 31E comprises a intermediate layer 60 which includes ducts 61 for circulating a cooling fluid. The comparison of Fig. 8 and Fig. 9 allows to understand that this design allows to increase the section of cooling ducts all other things being unchanged, with the benefit of an improved cooling. Alternately, this design allows to decrease the thickness of the bipolar plate, if the desired cooling performance is unchanged, with the benefit of an improved compactness. In this case, the total thickness of plates 2' is less than the total thickness of plate 2c.

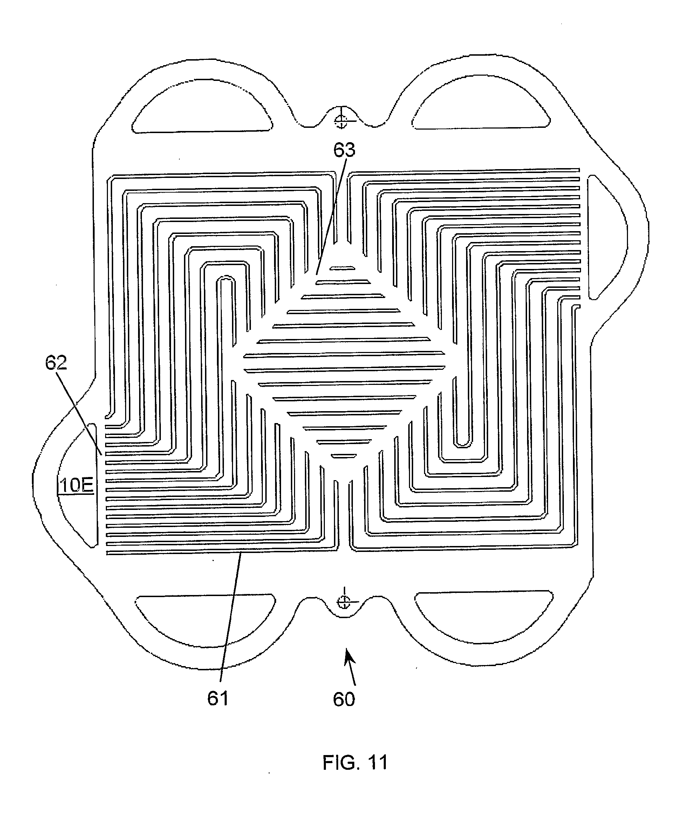

In order to keep the intermediate layer 60 as a single self sustaining piece, it is necessary to discontinue the cooling ducts 61 at places such as in the vicinity 62 (see Fig. 11) of holes 10E supplying the cooling fluid from outside channels. It is preferable to reinforce the intermediate layer 60 by discontinuing the cooling ducts 61 in some other zones such as in the central zone 63. Consequently, to retain the continuity of the cooling ducts, it is required to bridges the vicinity 62 and any similar zone like the central zone 63 with bridging grooves provided in the adjoining face of adjacent plates 2C and or 2'. As shown in Fig. 10, in order to maintain the total cross-section of the cooling ducts in the bridges while designing very thin grooves for bridging purposes, it is possible to increase the width of the bridging grooves, or to provide two or more bridging grooves 29 (Fig. 11) without impairing the robustness of adjacent plates 2C or 2' (because the grooves are very local).

The intermediate layer 60 can be manufactured for instance by punching an intermediate layer 30 with the appropriate tool, featuring the design of the ducts 61.

The intermediate layer 60 e.g. has a thickness of 300 µm in the compressed condition, that allows to diminish the thickness of one plate by this amount comparing with embodiment 30. Since the thickness of adjacent plates 2C is roughly 3,3 mm, the construction volume can be decreased about 10 percent by using only plates 2'. Also, the use of the third embodiment design allows for reducing the weight of the bipolar plate as well as for the intermediate layer, about 10 percent.

In all the embodiments shown, the passage of current through the bipolar plate 3 or an end plate varies as a function of the dc resistance of the intermediate layer 30, 60, 70 itself and of the contact resistance between the intermediate layer and the adjacent plate. It has emerged from test measurements that the contact resistance from end plate 2a to end plate 2b -as is known, for example, where a cord seal according to the prior art is used- is equal to the sum of the resistances (contact and dc resistance) when an intermediate layer of flexible graphite with a thickness of 0,5 mm is inserted in a bipolar plate 3 under the pressure prevailing in the usual clamping of a fuel cell stack.

This means that the use of an intermediate layer of correctly selected thickness affords a significant advantage in the transmission of current through the bipolar plate, regardless of the other advantages such as more cost-effective production of the end plates, greater ease of assembly etc.

## Claims

1. Plate assembly (31) for a fuel cell having a structure with an electrolyte zone, said plate assembly containing at least one duct (7) for supplying a fluid to the electrolyte zone, said plate assembly contacting said electrolyte zone, the plate assembly comprising at least two plates (2', 2a, 2b, 41, 42, 44), at least one of which including said at least one duct, a flexible intermediate layer (60) being removably arranged between said two plates, **characterized by** the fact that at least one cooling duct (61) being made at least in part into the intermediate layer (60), and wherein the adjoining faces of the plates have bridging grooves (29) for keeping the intermediate layer (60) as a single self sustaining piece and retaining the continuity of the cooling ducts.

2. Plate assembly according to Claim 1, **characterised in that** the intermediate layer (60) extends over the dimensions of the plates (2', 2a, 2b, 41, 42, 44).

3. Plate assembly according to Claim 1 or 2, **characterised in that** the intermediate layer (60) is compressible in the direction of its thickness.

4. Plate assembly according to any one of Claims 1 to 3, **characterised in that** the intermediate layer (60) is arranged in a fluid-tight manner with the adjoining end plates (2', 2a, 2b, 41, 42, 44).

5. Plate assembly according to any one of Claims 1 to 4, **characterised in that** the intermediate layer (60) is composed of flexible graphite.

6. Bipolar plate assembly (31) for a stack (1) of a plurality of fuel cells, said fuel cell stack comprising at least two cells connected in series, each having a structure with an electrolyte zone, said bipolar plate assembly joining the electrolyte zones of two adjacent cells, said bipolar plate assembly comprising a plate assembly according to any one of Claims 1 to 5.

7. Bipolar plate assembly according to Claim 6, **characterised in that** the intermediate layer (60) is arranged between a fluid supplying plate of one cell and a fluid supplying plate of an adjacent cell.

8. Bipolar plate assembly according to Claim 7, **characterised in that** the intermediate layer (60) is arranged between a fluid supplying plate of one cell and a cooling plate adjoining the said supplying plate.

9. End plate assembly for a single fuel cell or for an end cell of a stack containing a plurality of fuel cells, said cell(s) having a structure with an electrolyte zone, said end plate assembly joining the electrolyte zone of a cell and to a current collector, said end plate assembly comprising a plate assembly according to any one of Claims 1 to 5.

10. Fuel cell stack having a plate assembly according to any one of Claims 1 to 5.

11. Fuel cell stack having a bipolar plate assembly according to any one of Claims 6 to 8.

12. Fuel cell stack having an end plate assembly according to Claim 9.

13. Flexible Intermediate layer (60) for a plate assembly according to any one of claims 1 to 5 to be used in a fuel cell, the flexible intermediate layer having at least one cooling duct being made at least in part into the intermediate layer.

14. Flexible Intermediate layer according to claim 13, wherein the cooling ducts (61) are interrupted in some local zones.

15. Adjacent plate to be used with a flexible intermediate layer according to claim 14, wherein the adjoining face has bridging grooves (29).

## Patentansprüche

1. Plattenanordnung (31) für eine Brennstoffzelle, die eine Struktur mit einer Elektrolytzone besitzt, wobei die Plattenanordnung wenigstens einen Kanal (7) zum Zuführen eines Fluids zu der Elektrolytzone enthält, wobei die Plattenanordnung mit der Elektrolytzone in Kontakt ist, wobei die Plattenanordnung wenigstens zwei Platten (2', 2a, 2b, 41, 42, 44) umfasst, wobei wenigstens eine hiervon den wenigstens einen Kanal enthält, wobei eine flexible Zwischenschicht (60) entfernbar zwischen den zwei Platten angeordnet ist, **dadurch gekennzeichnet, dass** wenigstens ein Kühlungskanal (61) wenigstens teilweise in der Zwischenschicht (60) ausgebildet ist, wobei die angrenzenden Flächen der Platten Überbrückungsnuten (29) besitzen, um die Zwischenschicht (60) als ein einzelnes selbsttragendes Teil zu halten und die Kontinuität der Kühlungskanäle beizubehalten.

2. Plattenanordnung nach Anspruch 1, **dadurch gekennzeichnet, dass** sich die Zwischenschicht (60) über die Abmessungen der Platten (2', 2a, 2b, 41, 42, 44) erstreckt.

3. Plattenanordnung nach Anspruch 1 oder 2, **dadurch gekennzeichnet, dass** die Zwischenschicht (60) in Richtung ihrer Dicke zusammengedrückt werden kann.

4. Plattenanordnung nach einem der Ansprüche 1 bis 3, **dadurch gekennzeichnet, dass** die Zwischenschicht (60) auf fluiddichte Weise mit den benachbarten Stirnplatten (2', 2a, 2b, 41, 42, 44) angeordnet ist.

5. Plattenanordnung nach einem der Ansprüche 1 bis 4, **dadurch gekennzeichnet, dass** die Zwischenschicht (60) aus flexiblem Graphit gebildet ist.

6. Bipolare Plattenanordnung (31) für einen Stapel (1) aus mehreren Brennstoffzellen, wobei der Brennstoffzellenstapel wenigstens zwei in Reihe verbundene Zellen umfasst, wovon jede eine Struktur mit einer Elektrolytzone besitzt, wobei die bipolare Plattenanordnung die Elektrolytzonen von zwei benachbarten Zellen verbindet, wobei die bipolare Plattenanordnung eine Plattenanordnung nach einem der Ansprüche 1 bis 5 umfasst.

7. Bipolare Plattenanordnung nach Anspruch 6, **dadurch gekennzeichnet, dass** die Zwischenschicht (60) zwischen einer Fluidzufuhrplatte einer Zelle und einer Fluidzufuhrplatte einer benachbarten Zelle angeordnet ist.

8. Bipolare Plattenanordnung nach Anspruch 7, **dadurch gekennzeichnet, dass** die Zwischenplatte (60) zwischen einer Fluidzufuhrplatte einer Zelle und einer Kühlungsplatte, die an die Zufuhrplatte angrenzt, angeordnet ist.

9. Stirnplattenanordnung für eine einzelne Brennstoffzelle oder für eine Endzelle eines Stapels, der mehrere Brennstoffzellen enthält, wobei die eine oder die mehreren Zellen eine Struktur mit einer Elektrolytzone besitzen, wobei die Stirnplattenanordnung die Elektrolytzone einer Zelle mit einem Stromkollektor verbindet, wobei die Stirnplattenanordnung eine Plattenanordnung nach einem der Ansprüche 1 bis 5 umfasst.

10. Brennstoffzellenstapel, der eine Plattenanordnung nach einem der Ansprüche 1 bis 5 umfasst.

11. Brennstoffzellenstapel, der eine bipolare Plattenanordnung nach einem der Ansprüche 6 bis 8 umfasst.

12. Brennstoffzellenstapel, der eine Stirnplattenanordnung nach Anspruch 9 umfasst.

13. Flexible Zwischenschicht (60) für eine Plattenanordnung nach einem der Ansprüche 1 bis 5, die in einer Brennstoffzelle zu verwenden ist, wobei die flexible Zwischenplatte wenigstens einen Kühlungskanal besitzt, der wenigstens teilweise in der Zwischenschicht gebildet ist.

14. Flexible Zwischenschicht nach Anspruch 13, wobei die Kühlungskanäle (61) in einigen räumlich begrenzten Zonen unterbrochen sind.

15. Benachbarte Platte, die mit einer flexiblen Zwischenplatte nach Anspruch 14 zu verwenden ist, wobei die angrenzende Fläche Überbrückungsnuten (29) besitzt.

## Revendications

1. Ensemble plaque (31) pour pile à combustible dotée d'une structure comprenant une zone d'électrolyte, ledit ensemble plaque contenant au moins un conduit (7) servant à amener un fluide jusqu'à la zone d'électrolyte, ledit ensemble plaque touchant ladite zone d'électrolyte, l'ensemble plaque comportant au moins deux plaques (2', 2a, 2b, 41, 42, 44), dont au moins un comprend ledit ou lesdits conduits, une couche intermédiaire souple (60) étant disposé de façon amovible entre lesdites deux plaques, **caractérisé par le fait qu'**au moins un conduit (61) de refroidissement est réalisé au moins en partie dans la couche intermédiaire (60), et les faces accolées des plaques présentant des rainures (29) de pontage destinées à maintenir la couche intermédiaire (60) sous la forme d'une pièce autoporteuse unique et à conserver la continuité des conduits de refroidissement.

2. Ensemble plaque selon la revendication 1, **caractérisé en ce que** la couche intermédiaire (60) s'étend sur les dimensions des plaques (2', 2a, 2b, 41, 42, 44).

3. Ensemble plaque selon la revendication 1 ou 2, **caractérisé en ce que** la couche intermédiaire (60) est compressible dans le sens de son épaisseur.

4. Ensemble plaque selon l'une quelconque des revendications 1 à 3, **caractérisé en ce que** la couche intermédiaire (60) est disposée de manière étanche aux fluides avec les plaques (2', 2a, 2b, 41, 42, 44) d'extrémités accolées.

5. Ensemble plaque selon l'une quelconque des revendications 1 à 4, **caractérisé en ce que** la couche intermédiaire (60) est composée de graphite souple.

6. Ensemble plaque bipolaire (31) destiné à un bloc (1) d'une pluralité de piles à combustible, ledit bloc de piles à combustible comportant au moins deux piles reliées en série, chacune d'elles présentant une structure comprenant une zone d'électrolyte, ledit ensemble plaque bipolaire joignant les zones d'électrolyte de deux piles adjacentes, ledit ensemble plaque bipolaire comportant un ensemble plaque selon l'une quelconque des revendications 1 à 5.

7. Ensemble plaque bipolaire selon la revendication 6, **caractérisé en ce que** la couche intermédiaire (60) est disposée entre une plaque d'alimentation en fluide d'une pile et une plaque d'alimentation en fluide d'une pile adjacente.

8. Ensemble plaque bipolaire selon la revendication 7, **caractérisé en ce que** la couche intermédiaire (60) est disposée entre une plaque d'alimentation en fluide d'une pile et une plaque de refroidissement jouxtant ladite plaque d'alimentation.

9. Ensemble plaque d'extrémité pour une seule pile à combustible ou pour une pile d'extrémité d'un bloc contenant une pluralité de piles à combustible, ladite ou lesdites pile(s) présentant une structure comprenant une zone d'électrolyte, ledit ensemble plaque d'extrémité joignant la zone d'électrolyte d'une pile à un collecteur de courant, ledit ensemble plaque d'extrémité comportant un ensemble plaque selon l'une quelconque des revendications 1 à 5.

10. Bloc de piles à combustible doté d'un ensemble plaque selon l'une quelconque des revendications 1 à 5.

11. Bloc de piles à combustible doté d'un ensemble plaque bipolaire selon l'une quelconque des revendications 6 à 8.

12. Bloc de piles à combustible doté d'un ensemble plaque d'extrémité selon la revendication 9.

13. Couche intermédiaire souple (60) pour ensemble plaque selon l'une quelconque des revendications 1 à 5 destiné à être utilisé dans une pile à combustible, la couche intermédiaire souple comprenant au moins un conduit de refroidissement réalisé au moins en partie dans la couche intermédiaire.

14. Couche intermédiaire souple selon la revendication 13, les conduits (61) de refroidissement étant interrompus dans certaines zones locales.

15. Plaque adjacente destinée à être utilisée avec une couche intermédiaire souple selon la revendication 14, la face accolée étant dotée de rainures (29) de pontage.
